(19) Europäisches Patentamt
European Patent Office
Office européen des brevets

(11) EP 0 465 184 B1

(12) **EUROPEAN PATENT SPECIFICATION**

(45) Date of publication and mention
of the grant of the patent:
**25.09.1996  Bulletin 1996/39**

(51) Int Cl.6: **H05B 3/14**, F01N 3/20

(21) Application number: **91305927.5**

(22) Date of filing: **01.07.1991**

(54) **Resistance adjusting type heater, catalytic converter and method of operating catalytic converter**

Heizelement mit einstellbarem Widerstand, katalytischer Konverter und Verfahren zur Steuerung der Abgasemissionen

Dispositif de chauffage à résistance réglable, convertisseur catalytique et procédé de commande des émissions des gaz d'échappement

(84) Designated Contracting States:
**DE FR GB IT SE**

(30) Priority: **04.07.1990 JP 176942/90**
**04.07.1990 JP 176943/90**

(43) Date of publication of application:
**08.01.1992  Bulletin 1992/02**

(60) Divisional application: **95117896.1**

(73) Proprietor: **NGK INSULATORS, LTD.**
**Nagoya City Aichi Pref. (JP)**

(72) Inventors:
• **Abe, Fumio**
**Aichi-prefecture 475 (JP)**
• **Harada, Takashi**
**Nagoya-city, Aichi-prefecture 465 (JP)**
• **Mizuno, Hiroshige**
**Tajimi-city, Gifu-prefecture 507 (JP)**

(74) Representative: **Stoner, Gerard Patrick et al**
**MEWBURN ELLIS**
**York House**
**23 Kingsway**
**London WC2B 6HP (GB)**

(56) References cited:
EP-A- 0 194 507          EP-A- 0 452 125
WO-A-89/10471           GB-A- 2 049 377
US-A- 3 956 614

**Description**

The present invention relates to heaters, especially honeycombstructure heaters, to catalytic converters which are suitable for use in automotive exhaust emission control, and to methods of operating such heaters and catalytic converters.

Catalytic converters for use in controlling automotive exhaust gas must have a predetermined temperature or above when operated so as to make the catalyst catalytically active. Hence, the catalyst must be heated when the temperature thereof is not sufficiently high, i.e., at the beginning of running of a vehicle.

Such techniques for heating the catalyst have been proposed in, for example, JP-UM-A-67609/1988. This discloses a catalytic converter comprising a main ceramic monolithic catalyst and a metal monolithic catalyst disposed upstream of and adjacent to the main ceramic monolithic catalyst. The metal monolithic catalyst comprises an electrically conductive metal substrate with alumina coated thereon, and constitutes a preheater, disposed upstream and adjacent to the main monolithic catalyst. It has a foil-type metal honeycomb structure constructed such that current passes from its inner periphery to its outer periphery to generate heat. The resistance of the metal monolithic catalyst is not adjusted (i.e., only the material, dimensions and rib thickness of the metal honeycomb structure are defined and no adjustment is made to the resulting resistance of the metal honeycomb structure), and the metal monolithic catalyst exhibits insufficient temperature-rise characteristics. Furthermore, since the electrodes are provided in the inner peripheral portion of the structure, the central portion thereof does not act as a catalyst, and pressure loss is generated. Furthermore, the electrodes readily break due to the flow of exhaust gas.

Meanwhile, an example of such a catalytic converter has been introduced in SAE Paper 900503. This catalytic converter has a size of 480 cm$^3$, and includes a heater with a catalyst carried thereon. The heater is energized by power of 3 kW while oxygen is being supplied thereto, the energization being started before the engine is started, and the exhaust gas conversion at the beginning of the operation of the engine of a vehicle of the like can be increased.

However it takes sixty seconds for the heater to be heated to 350 °C, despite the large power consumption, because of the relatively large foil-type heater. This reduces exhaust gas conversion. Furthermore, it is difficult in a practical operation to energize the heater before the engine is operated. Also, the above literature does not refer to the amount of exhaust gas which can be controlled by the above catalytic converter, the temperature at which the catalyst functions n or the energization method. Furthermore a telescope phenomenon, inherent to the foil type heater, readily occurs in this heater to cause faulty operation thereof.

Our EP-A-452125, published on 16 October 1991 after the priority date of the present patent, describes honeycomb-structure heater bodies sintered from metal powders and having one or more slits, extending in the honeycomb structure parallel to its passage walls, to adjust its resistance. The use is for heating catalytic converters.

WO-A-89/10471 describes honeycomb-structure bodies of wound corrugated foil strip, with electrodes for heating the structure. Preferably a catalyst is supported on the structure, so that it acts as a catalytic converter.

The problems addressed herein include the provision of new resistance-adjusted heaters and catalytic converters, and new methods of operating heaters and catalytic converters, especially with the aim of reducing problems mentioned above.

In one aspect, we provide a heater comprising a resistance-adjusted heatable sintered honeycomb structure of Fe-Cr-Al, Fe-Cr or Fe-Al, having a large number of passages, the honeycomb structure having at least two electrodes for electrical connection so that a current can flow through the honeycomb structure, wherein

the honeycomb structure has at least one slit to adjust its resistance to the flow of current such that a current density of at least 5 A/mm$^2$ is obtainable in the structure at a voltage of not more than 25V between the electrodes. A catalyst may be provided on the honeycomb structure.

A catalytic converter can also be provided by positioning the heater upstream or downstream of a main monolithic catalysts, or between two of them.

In another aspect we provide a method of operating a catalytic converter comprising a main monolithic catalyst disposed adjacent a heater,

the heater comprising a resistance-adjusted sintered honeycomb structure having a large number of passages, having at least two electrodes electrically connected so that a current can flow through the honeycomb structure to heat it;
the method comprising causing said current to flow at a current density of at least 5A/mm$^2$.

In particular, the method preferably involves using current density of at least 5A/mm$^2$ at the time of starting of the engine and maintaining it until the heatable honeycomb structure reaches a catalyst activation temperature, and then reducing the power supplied to the heatable honeycomb structure.

In a further aspect we provide a method using current density of at least 5A/mm$^2$ at the time of starting of the engine and maintaining it until the heatable honeycomb structure reaches a catalyst activation temperature, and then reducing the power supplied to the heatable honeycomb structure. The preferred temperature for reducing the power level is at least 300°C.

**BRIEF DESCRIPTION OF THE DRAWINGS**

Fig. 1(a) is a perspective view of an example of a resistance-adjusting type heater;
Fig. 1(b) is an enlarged perspective view of the essential parts of the heater of Fig. 1(a); and
Fig. 2 is a graph showing the relation between the time required to attain a given current density and the attained current density, obtained in the heater temperature rising characteristics checking test.

**DETAILED DESCRIPTION**

In a resistance-adjusting type heater proposed herein, the honeycomb structure having a large number of passages has at least two electrodes through which a current is supplied thereto. The honeycomb structure also has a resistance-adjusted structure which attains a current density of 5 A/mm$^2$ or above between the electrodes.

In this way, low-temperature automotive exhaust emissions at the beginning of the operation of an engine or the like can be quickly heated, and a high exhaust gas conversion can be achieved.

Current is supplied between the electrodes at a current density of 5 A/mm$^2$ or above. In this way, the rate at which the temperature of the heater is raised increases, enabling the exhaust emissions at the beginning of the operation of the engine to be controlled. That is, the temperature of the heater may reach 300°C or above within ten seconds. This allows the main catalyst and the catalyst carried on the heater to function effectively.

Supply of current at a current density of 8 A/mm$^2$ or above may enable the temperature of the heater to reach 300°C or above within five seconds, and is therefore more preferable. Supply of current at a current density of 30 A/mm$^2$ or above requires a large amount of power, raises the temperature of the catalyst carried on the heater to too high a value, and is therefore undesirable from the viewpoint of durability of the catalyst.

The temperature at which the main monolithic catalyst or the catalyst carried on the heater functions is generally 300°C or above. In a practical operation, the temperature at the outlet of the heater or converter is measured, and power supplied to the heater is adjusted such that the heater or converter is heated to 300°C or above.

In the present specification the term, "current density" is defined to refer to the dimensions of the solid honeycomb material, not to the dimensions including the cell voids.

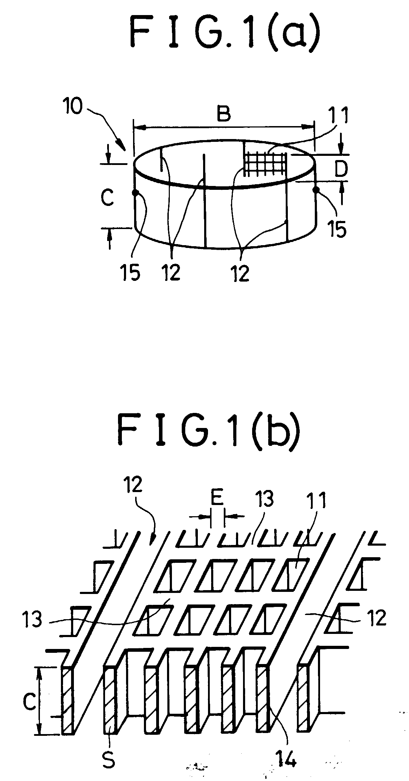

For example, in a resistance-adjusted type heater comprising a honeycomb structure 10 having a large number of passages 11 and a predetermined number of slits 12 which serve as the resistance adjusting means, as shown in Figs. 1(a) and 1(b), when the cross-sectional area (rib thickness (E) x length of heater (C)) of a cross-section 14 of a cell wall (rib) 13 is S, a number of ribs between the adjacent slits is n (e.g., n 5 in the case of the heater shown in Fig. 1(b)) and the current which flows through the heater is I the current density is given by I / (S × n).

A catalytic converter comprising the above-described resistance-adjusted type heater and a main catalyst may be operated in the manner described below when it is used to control automotive exhaust emissions. The heater is energized at a current density of 5 A/mm$^2$ or above for at least sixty seconds after the engine is started, to heat the low-temperature exhaust gas quickly at the beginning of the operation of an engine. If the current density is below 5 A/mm$^2$, the heater must be preheated before the engine is started to obtain desired exhaust gas conversion characteristics. Therefore, this is not practical.

The heater is energized at a current density of 5 A/mm$^2$ or above until it is heated to a temperature at which any catalyst carried on the heater and the main catalyst are activated (between 300 and 400°C). Thereafter, the level of power supplied to the heater is reduced and the heater is successively energized at a reduced power level. Reduction in the power level is achieved either by turning the heater on/off or by energizing the heater at a current density which is below 5 A/mm$^2$.

Energization of the heater substantially concurrently with the operation of the engine may be either energization of the heater concurrently with the operation of the engine or energization about several seconds, e.g., five seconds, before the engine starts.

In a catalytic converter operating method according to another aspect proposed herein, the heater is energized at a predetermined power level or above and thereby heated substantially concurrently with the operation of an engine. During the heating, an oxidizing gas is introduced into the catalytic converter. When the temperature of the heater exceeds a value at which a main catalyst of the catalytic converter or a light-off catalyst carried on the heater functions, the power level is reduced by an output adjuster and supply of the oxidizing gas is suspended.

Thus, since the low-temperature exhaust gas can be quickly heated to a temperature at which the catalyst starts functioning or above at the initial stage of the operation of an engine when the emissions of a vehicle is a maximum, increase in the exhaust gas conversion can be achieved. Furthermore, since the power level is reduced immediately after the desired temperature is reached, i.e., immediately after the catalyst is ignited, an efficient operation of the catalytic converter is possible.

In another aspect, the heater is energized at a power level of 1.5 kW or above, more preferably, at 3 kW or above, per unit flow rate of exhaust gas ($m^3$/minute) and thereby heated substantially concurrently with the operation of the engine. In the case of the energization at a power level of 1.5 kW or above, the heater is heated to about 400 °C within ten seconds. In the case of energization at a 3 kW or above, 400 °C is attained in five seconds. In both cases, since the quantity of exhaust gas varies at the beginning of the operation of the engine, an average quantity of exhaust gas emitted when the temperature thereof is below 300 °C is used.

To energize the heater at the initial stage of the operation of the engine, a battery of 24V is usually used. At that time, the battery is preferably used together with a capacitor to obtain a temporary large current.

Since the exhaust gas at the beginning of the operation of the engine is rich (reducing atmosphere), introduction of the oxidizing gas is necessary for the conversion of CO and HC into $CO_2$ and water. Examples of suitable oxidizing gas include air, oxygen and ozone. From the practical point of view, however, introduction of air is simple and thus preferred. When the oxidizing gas is introduced, the amount of oxidizing gas is controlled in accordance with the engine speed by a mass flow sensor. In a practical operation, the amount of, for example, secondary air introduced is controlled such that the oxidation-reduction index given by the following expression will be held between 0.7 and 1.1, more preferable, between 0.8 and 1.0.

$$\text{Oxidation-reduction index} = \frac{\text{Oxidizing gas}}{\text{Reducing gas}} = \frac{(O_2 + 1/2NO)}{(2/3CO + 3/2HC)}$$

Oxidizing gas is introduced only when the oxidation-reduction index is outside of the aforementioned range. Preferably, introduction of the oxidizing gas is suspended in sixty seconds or below.

The heater is heated generally to a temperature at which the main catalyst of the catalytic converter or the light-off catalyst carried on the heater is activated or above, i.e., 300 °C or above.

When the temperature of the heater exceeds the value at which the catalyst is activated, the power level is reduced I by an output adjuster. In a practical operation, reduction in the power level is achieved by performing on-off control of the battery of 24V or 12V (by reducing the power level per unit time) or by performing inverter control. Although the time when the operation of reducing the power level begins varies depending on the level of power supplied, as stated above, since the temperature of the heater reaches 400 °C within five or ten seconds, reduction in the power level is conducted five or ten seconds later from the energization of the heater.

Energization of the heater is suspended generally in sixty seconds or less.

The preferred heater employed in the present techniques is one having a resistance adjusting means. Such a heater is energized at a preferred current density of 5 A/$mm^2$ or above. Energization of the heater at a current density of 5 A/$mm^2$ or above increases the rate at which the temperature of the heater rises, and thus allows the temperature of the heater to reach 300 °C or above within ten seconds. This in turn enables the main catalyst or the light-off catalyst carried on the heater to be activated effectively. More preferably, the heater is energized at a current density of 8 A/$mm^2$ or above. However, with too high a current density, a large amount of power is required and the catalyst on the heater is heated too high. From the viewpoint of durability of the catalyst, energization at no more than 30 A/$mm^2$ is therefore preferred.

It is desirable for the basic body of the heater to have a honeycomb structure.

Whereas any material, ceramic or metal, capable of generating heat when energized, can be used as the material of the honeycomb structure which is a basic body of the present invention, the use of metal enhances the mechanical strength and is thus preferred. Examples of such metals include stainless steel and materials having compositions of Fe-Cr-Aℓ, Fe-Cr, Fe-Aℓ, Fe-Ni, W-Co, and Ni-Cr. Among the above materials, Fe-Cr-Aℓ, Fe-Cr and Fe-Aℓ are preferred because of low cost and high resistance to heat, oxidation and corrosion. The honeycomb structure employed in the present invention may be porous or non-porous. In the case where a catalyst is carried on the honeycomb structure, however, a porous honeycomb structure is preferred because a catalyst layer can be closely adhered to such a honeycomb structure, and hardly peels off the honeycomb structure even when a difference in the thermal expansion between the honeycomb structure and the catalyst exists.

The metal honeycomb structure may be prepared in the manner described below.

First, Fe powder, Aℓ powder and Cr powder, or alternatively powders of alloys of these metals, are mixed to prepare a metal powder mixture having a desired composition. Subsequently, the metal powder mixture is blended into an organic binder, such as methyl cellulose or polyvinylalcohol, and water to produce a readily formable mixture. That mixture is then formed into a shape of a desired honeycomb configuration by extrusion.

Next, the formed honeycomb body is fired in a non-oxidizing atmosphere at a temperature ranging between 1000 and 1450 °C. During the sintering in the non-oxidizing atmosphere containing hydrogen, the organic binder is decomposed and thereby removed with the aid of Fe or the like, which acts as a catalyst. A good sintered body (a honeycomb structure) can therefore be obtained.

Sintering at a temperature lower than 1000 °C achieves no sintering. Sintering conducted at a temperature higher than 1450 °C causes deformation of the resulting sintered body and is thus undesirable.

Preferably, a heat-resistant metal oxide layer is then formed on the surface of the cell walls and the surface of the pores of the obtained honeycomb structure.

Next, a resistance adjusting arrangement of a desired form is preferably provided on the obtained honeycomb structure between the electrodes thereof, which will be described later.

The resistance adjusting arrangement provided on the honeycomb structure may take on any of the following forms:

(1) a slit or slits of any length, formed in any direction at any position
(2) variations in the length of the cell walls in the axial direction of the passages
(3) variations in the thickness (wall thickness) of the cell walls of the honeycomb structure or variations in the cell density of the honeycomb structure, or
(4) a slit or slits formed in the cell wall (rib) of the honeycomb structure.

Among the above-mentioned forms, formation of a slit or slits according to No.(1) is more preferable because it can easily control a heated portion.

Electrodes are provided generally on the outer peripheral portion of or inside of the thus-obtained metal honeycomb structure by welding or brazing to manufacture a honeycomb heater.

The term, "electrodes" is used in this application to refer to any terminal through which a voltage is applied to the heater. The electrodes therefore include the direct bonding of the outer peripheral portion of the heater to a can body and terminals for grounding.

In the case of the metal honeycomb structure which is used as a heater, the resistance thereof will be preferably held between 0.001 $\Omega$ and 0.5 $\Omega$.

Preferably, a catalyst is placed on the surface of the thus-obtained metal honeycomb structure so as to allow heat to be generated due to reaction (oxidation) of the exhaust gas.

The catalyst supported on the surface of the metal honeycomb structure is made of a carrier having a high surface area and a catalyst activating material supported on the carrier. Typical examples of the carriers having a high surface area include $\gamma$-$A\ell_2O_3$ , $TiO_2$, $SiO_2$ -$A\ell_2O_3$ and perovskite. Examples of the catalytic activating materials include noble metals, such as Pt, Pd and Rh, and base metals, such as Cu, Ni, Cr and Co. The preferred catalyst comprises one in which from 10 to 100 g/ft$^3$ of Pt and/or Pd is loaded on the carrier made of $\gamma$-$A\ell_2O_3$.

Whereas the honeycomb structure may have any honeycomb configuration, it is desirable that the cell density be held between 6 to 1500 cells/in$^2$ (cpi$^2$) (which is 0.9 to 233 cells/cm$^2$) with a wall thickness ranging from 50 to 2000 $\mu$m.

In a resistance adjusting type heater designed for use in automotive exhaust emission control, the best mode of the configuration of the heater and that of the slits formed in that heater will be described below.

The cell wall thickness (rib thickness) of the preferred honeycomb structure ranges between 75 and 500 $\mu$m. Below 75 $\mu$m, the structure deteriorates in strength and in the life of the heater. Above 500 $\mu$m, the pressure loss is great and a large amount of power is required to raise the temperature thereof. The most preferable range is between 100 and 300 $\mu$m.

It is desirable that the honeycomb structure has a cell density ranging from 15.5 to 62 cells/cm$^2$ (100 to 400 cells/in$^2$). More specifically, a cell density of 15.5 cells/cm$^2$ (100 cells/in$^2$) or above is preferred taking into account the heat transfer area for heating gas flow in passages formed in the honeycomb structure and the catalyst surface area when the catalyst is carried on the honeycomb structure. Above 62 cells/cm$^2$ (400 cells/in$^2$), formation of the slits is difficult, and short-circuiting readily occurs due to the insufficient distance between the ribs which form a slit.

The open frontal area of the honeycomb structure is preferably between 50 and 85% from the viewpoints of the pressure loss and the strength.

With too long a heater length (the length of the heater in the axial direction of its passages), the cross-sectional area increases, thus requiring a large amount of current. With too short a heater length, the heat transferring area and catalyst geometrical surface area become undesirably small. In a heater designed for use as a preheater disposed in advance of the main catalyst, the preferred length of the heater is about 1/20 to 1/3 of the length of the main catalyst.

Slits are preferred to control the heating portion of the heater. In the case of a heater designed for use in automotive exhaust gas control, it is preferable for the heater to be heated relatively uniformly, and the slits are therefore formed such that the distance between the slit and the outer wall is larger than that between the adjacent slits.

A large number of slits formed in the heater increases the overall heating length of the heater and is therefore preferable. however, it also increases the resistance of the heater. This may result in reduction in a current density to below 5 A/mm$^2$ in the case where the voltage applied to the heater is fixed. So, the number of slits formed in the heater is determined such that it achieves a current density of 5 A/mm$^2$ or above.

The term, "honeycomb structure" is employed in this application to refer to an integral body having a large number of passages partitioned by cell walls. The passages may have any cross-sectional form (cell shape), e.g., a circular, polygonal or corrugated form.

The present invention will further be illustrated in the following illustrative examples.

Fig. 1(a) is a perspective view of an example of a resistance-adjusting type heater. Fig. 1(b) is an enlarged perspective view of the essential parts of the heater of Fig. 1(a) which comprises a honeycomb structure 10 having a large number of passages 11 and a plurality of slits 12 which serve as the resistance adjusting means, the outer wall of the honeycomb structure 10 being provided with two electrodes 15. In Fig. 1(a) and Fig. 1(b), a reference numeral 13 denotes a cell wall (rib); 14, the cross-section of the rib; S, the cross-sectional area of the section 14 of all the ribs present between the adjacent slits; B, the diameter of a heater; C, the length of a heater; and D, the length of a slit.

## Example 1

Fe powder, Fe-Cr powder (in which Cr was present in a ratio of 50 wt%) and Fe-A$\ell$ powder (in which A$\ell$ was present in a ratio of 50 wt%), having average particle sizes of 10, 20 and 22 $\mu$m, were mixed to prepare a mixture having a composition of Fe-20Cr-5A$\ell$ (% by weight). The obtained mixture was then blended into an organic binder (methyl cellulose), an antioxidant (oleic acid) and water to produce a readily formable body. The obtained body was then formed into honeycomb bodies having various rib thicknesses and various numbers of square cells (shown in Table 1) by extrusion. The formed honeycomb structures were dried, sintered in an atmosphere of $H_2$ at 1300 °C, and then subjected to heat treatment at 1000°C in the oxidizing atmosphere to form a heat-resistant metal oxide layer. The porosity of the obtained honeycomb structures was 22% by volume and the average pore diameter thereof was 5 $\mu$m.

The obtained honeycomb structures 10 having an outer diameter of 90 mm$\phi$ were processed such that they had various heater lengths C shown in Table 1. Thereafter, a predetermined number of slits 12, having a length ranging from 50 to 70 mm, were formed in the individual honeycomb structure 10. Thereafter, two electrodes 15 were provided on the outer wall of the individual resistance adjusting type heater obtained, and then a heat-resistant inorganic adhesive of zirconia was filled in the outer peripheral portion of each slit 12 to form an insulating portion, as shown in Fig. 1(a).

## Example 2

### [Test of heater temperature rising characteristics]

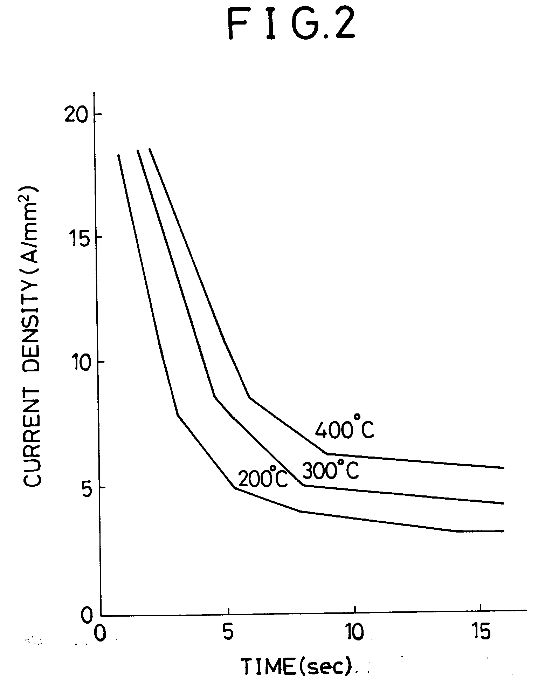

The individual heater was energized by a power source comprising a single 12V battery for use in an automobile, or two such batteries which were connected in series, while air was supplied thereto at a rate of 0.7 $m^3$/min. At that time, the temperature of the heater was measured. Table 1 and Fig. 2 respectively show the time required for each heater to be heated to temperatures of 200 °C, 300 °C and 400 °C.

The preferred heaters thus provide a current density of at least 5 A/mm$^2$ at 24V, or at 12V.

Table 1

| | Heater No. | Thickness of rib (mm) | Cell density (cpi²) | Length of heater (mm) | No. of slits (pcs) | No. of ribs between adjacent slits (pcs) | Heat generating cross sectional area (mm²) | Overall heat generating length (mm) | Voltage (V) | Current (A) | Resistance (Ω) | Current density (A/mm²) | Heater temperature (time required to attain temperature) 200 °C (sec) | 300 °C (sec) | 400 °C (sec) |
|---|---|---|---|---|---|---|---|---|---|---|---|---|---|---|---|
| Effect exerted by a difference in the number of ribs | 1 | 0.23 | 300 | 15 | 4 | 5 | 17.3 | 203 | 11.4 | 135 | 0.084 | 7.8 | 3.0 | 5.1 | 7.5 |
| | 2 | 0.23 | 300 | 15 | 4 | 4 | 13.8 | 137 | 11.5 | 145 | 0.079 | 10.5 | 2.5 | 4.0 | 5.0 |
| | 3 | 0.23 | 300 | 15 | 4 | 3 | 10.4 | 43 | 11.3 | 165 | 0.068 | 18.3 | 0.9 | 1.7 | 2.1 |
| Effect exerted by a difference in the number of slits | 4 | 0.23 | 300 | 15 | 7 | 5 | 17.3 | 420 | 22.5 | 155 | 0.145 | 9.0 | 2.8 | 4.5 | 5.5 |
| | 5 | 0.23 | 300 | 15 | 8 | 5 | 17.3 | 412 | 22.4 | 145 | 0.154 | 8.4 | 3.0 | 4.6 | 6.0 |
| | 6 | 0.23 | 300 | 15 | 10 | 5 | 17.3 | 510 | 22.4 | 110 | 0.204 | 6.4 | 4.0 | 6.2 | 9.0 |
| Effect exerted by a difference in the cell configuration | 7 | 0.11 | 400 | 15.6 | 5 | 9 | 15.0 | 270 | 11.5 | 120 | 0.096 | 8.0 | 3.0 | 5.0 | 6.8 |
| | 8 | 0.15 | 400 | 15 | 5 | 6 | 13.5 | 250 | 11.5 | 135 | 0.085 | 10.0 | 2.7 | 4.4 | 5.3 |
| Effect exerted by a difference in the heater length | 9 | 0.23 | 300 | 10.0 | 4 | 8 | 18.4 | 180 | 22.5 | 220 | 0.102 | 12.0 | 2.4 | 3.5 | 4.7 |
| | 10 | 0.23 | 300 | 23.5 | 15 | 4 | 21.6 | 870 | 22.3 | 145 | 0.153 | 6.7 | 4.0 | 6.5 | 8.5 |
| Comparative example | 5 | 0.23 | 300 | 15 | 8 | 5 | 17.3 | 420 | 11.3 | 75 | 0.150 | 4.3 | 7.0 | 15.0 | 25.0 |
| | 6 | 0.23 | 300 | 15 | 10 | 5 | 17.3 | 510 | 11.4 | 55 | 0.207 | 3.2 | 14.0 | - * | - * |

\* 3 0 0°C and 4 0 0°C are not attained.

As can be seen from Table 1 and Fig. 2, among the heaters having various configurations, the heaters which ensure a current density of 5 A/mm$^2$ or above can be heated to 300°C within ten seconds.

**Example 3**

**[Test of performance at the beginning of operation of engine]**

The heater No. 5 and a heater No. 11 which comprised of the heater No. 5 with a catalyst of $CeO_2$ - $\gamma$-$A\ell_2O_3$ (in which Pt and Pd were respectively present in an amount of 20g/ft$^3$) carried (coated) thereon were respectively prepared. Each of the heaters Nos. 5 and 11 was disposed in advance of (upstream of) a three-way catalyst (whose rib thickness was 6 mil and whose cell density was 62 cells/cm$^2$ (400 cells/in$^2$)) which was a main monolithic catalyst having an outer diameter of 90 mm$\phi$ and a length of 100 mm. A Test of the performance of each of these catalytic converter systems at the beginning of the operation of an engine was conducted by operating an engine (A/F = 14.6) in such a manner that the temperature thereof was raised at a fixed speed from 100°C to 420°C over two minutes and was then maintained at 420°C for one minute and by measuring the conversion for CO, HC and NOx. At that time, the exhaust gas was introduced at a rate of 0.7 m$^3$/min. Energization of the heater by two types of batteries, 24 V and 12 V, was started when the temperature of the exhaust gas reached 100°C. Thereafter, on-off control was performed on the heater so as to maintain the temperature of the heater to 450°C. Table 2 shows the obtained average conversion for the emissions.

Table 2

| | Test No. | Heater No. | Voltage (V) | Initial current (A) | Current density (A/mm²) | Time required for 300°C to be reached (sec) | Average conversion rate CO | HC | NOx |
|---|---|---|---|---|---|---|---|---|---|
| Example of the present Invention | 1 | 5 | 22.4 | 145 | 8.5 | 4.5 | 66 | 52 | 64 |
| | 2 | 11 | 22.3 | 150 | 8.7 | 4.0 | 72 | 60 | 71 |
| Example for reference | 3 | 5 | 0 | — | — | (75.0)* | 45 | 32 | 44 |
| | 4 | 11 | 0 | — | — | (75.0)* | 48 | 35 | 47 |
| Comparative example | 5 | 5 | 11.2 | 75 | 4.3 | 14.8 | 53 | 38 | 48 |
| | 6 | 11 | 11.3 | 75 | 4.3 | 12.0 | 58 | 44 | 52 |

\* Heated by exhaust gas

As is clear from Table 2, the examples which ensured a current density of 5 A/mm² or above exhibited more excellent exhaust gas conversion than the comparative examples which ensured a current density of no more than 5 A/mm². Among the examples, the catalyst of heater No. 2 was activated to the highest degree. Heater No. 2 was turned off after it had been energized for about one and a half minutes, because it started heat generation by ignition of the catalyst carried on the heater.

**Example 4**

The performance of the catalytic converter at the beginning of the operation of an engine was tested by introducing an exhaust gas of A/F = 14.0 ( a rich one whose oxidation-reduction index was 0.40) whose temperature was raised at a fixed rate from 100 °C to 420 °C for two minutes and was then maintained at 420 °C for one minute and by measuring the conversion for the exhaust emissions (CO, HC and NOx). At that time, the exhaust gas was respectively introduced at a rate of 0.7 $m^3$/min and 1.0 $m^3$/min. Secondary air was introduced into the catalytic converter at a rate of 50$\ell$/min concurrently with the introduction of the engine exhaust gas. Supply of the secondary air was suspended sixty seconds later.

The catalytic converter employed in this Example comprised a three-way catalyst (whose rib thickness was 5 mil and whose cell density was 62 cells/$cm^2$ (400 cells/$in^2$)), having an outer diameter of 90 mm$\phi$ and a length of 100 mm, which served as a main monolithic catalyst, and a heater disposed in advance of (upstream of) the three-way catalyst.

The heater employed in the above catalytic converter was manufactured in the manner described below.

Fe powder, Fe-Cr powder (in which Cr was present in a ratio of 50 wt%) and Fe-A$\ell$ powder (in which A$\ell$ was present in a ratio of 50 wt%), having average particle sizes of 10, 20 and 22 $\mu$m, were mixed to prepare a mixture having a composition of Fe-20Cr-5A$\ell$ (% by weight). The obtained mixture was then blended into an organic binder (methyl cellulose), an antioxidant (oleic acid) and water to produce a readily formable body. The obtained body was then formed into honeycomb bodies having various rib thicknesses and various numbers of square cells shown in Table 3 by extrusion. The formed honeycomb structures were dried, sintered in an atmosphere of $H_2$ at 1300 °C, and then subjected to heat treatment at 1000 °C in the atmosphere. The porosity of the obtained honeycomb structures was 22 % and the average pore diameter thereof was 5 $\mu$m.

As shown in Fig. 1 (a) (in this case, the number of slits was four), the obtained honeycomb structures 10 having an outer diameter of 90 mm$\phi$ were processed such that they had various heater lengths shown in Table 3. Thereafter, a predetermined number of slits 12, having a length ranging from 50 to 70 mm, were formed in the individual honeycomb structure 10. Thereafter, two electrodes 15 were provided on the outer wall of the individual resistance adjusting type heater obtained, and then a heat-resistant inorganic adhesive of zirconia was filled in the outer peripheral portion of each slit 12 to form an insulating portion.

Table 3

|  | Thickness of rib (mm) | No. of cells (cpi$^2$) | Length of heater (mm) | No. of slits(pcs) |
|---|---|---|---|---|
| Heater No.12 | 0.23 | 300 | 15 | 8 |
| Heater No.13 | 0.15 | 400 | 15 | 5 |
|  | No. of ribs between slits (pcs) | Heat generating area (mm$^2$) | Overall heat generating length (mm) | |
| Heater No.12 | 5 | 17.3 | 412 | |
| Heater No.13 | 6 | 13.5 | 250 | |

A catalyst of $CeO_2$-$\gamma$-A$\ell_2O_3$ in which Pt and Pd were respectively present in an amount of 20 g was placed on each of heater Nos. 12 and 13.

The individual heater was energized using a battery of 24 V or 12 V. Energization started concurrently with the introduction of the engine exhaust gas. When the temperature of the heater reached 450 °C, on-off control began. For reference, test was also conducted in which the heater was energized for thirty seconds before the exhaust gas was introduced.

Table 4 shows the results of the test.

Table 4

|  | Test No. | Heater No. | Voltage (V) | Current (A) | Amount of exhaust gas (m²/min) | Power (kw/m³) | Current density (A/mm²) | Introduction of oxygen | Time required for the heater temperature to be reached 300°C | 400°C | Heater no-off starting time | Average conversion rate (%) CO | HC | NOx |
|---|---|---|---|---|---|---|---|---|---|---|---|---|---|---|
| Example for reference | 1 | 12 | – | – | 0.7 | – | – | No | (75 sec)* | (113 sec)* | – | 13 | 11 | 46 |
|  | 2 | 12 | – | – | 1.0 | – | – | No | (75 sec)* | (113 sec)* | – | 10 | 8 | 44 |
| Example of the present invention | 3 | 12 | 22.4 | 145 | 0.7 | 4.6 | 6.0 | Yes | 4.5 | 5.0 | 6.0 | 65 | 50 | 64 |
|  | 4 | 12 | 22.4 | 145 | 1.0 | 3.2 | 6.0 | Yes | 5.3 | 7.0 | 8.0 | 62 | 57 | 60 |
|  | 5 | 13 | 11.5 | 135 | 0.7 | 2.2 | 10 | Yes | 4.2 | 5.0 | 6.0 | 64 | 51 | 65 |
|  | 6 | 13 | 11.5 | 135 | 1.0 | 1.6 | 10 | Yes | 5.2 | 6.8 | 7.5 | 58 | 45 | 38 |
| Comparative example | 7 | 13 | 11.3 | 75 | 0.7 | 1.2 | 4.3 | Yes | 14.5 | 24.0 | 35 | 26 | 23 | 52 |
|  | 8 | 13 | 11.3 | 75 | 1.0 | 0.8 | 4.3 | Yes | 20.5 | 35.0 | 55 | 22 | 21 | 48 |
|  | 9 | 13 | 22.4 | 145 | 0.7 | 4.6 | 6.0 | No | 4.5 | 4.8 | 5.8 | 13 | 11 | 60 |

\* Heated by exhaust gas

As is clear from Table 4, when the level of power supplied to the heater is low, it takes much time for the heater to

11

be heated to 300 °C or above. In consequence, the degree at which the catalyst is activated is low, and the exhaust gas conversion is also low. Also, in the case where 02 iS not introduced, the conversion for CO and HC remains low, even when the heater is heated.

It is also apparent from Table 4 that when the heater is heated at a power level of Examples embodying our proposals and $O_2$ is introduced, a high conversion for each emission can be achieved.

As will be understood from the foregoing description, in the heater and catalytic converter described above, since the resistance adjusting means is formed on the heater and catalytic converter such that it ensures a current density of 5 $A/mm^2$ or above, or since the catalytic converter is operated such that it ensures a current density of 5 $A/mm^2$ or above, low-temperature automotive exhaust emissions at the beginning of the operation of an engine or the like can be quickly heated, and a high exhaust gas conversion can thus be achieved.

Then, in the catalytic converter operating method according to another aspect of the present invention, the temperature of a heater and that of a main catalyst incorporated in the catalytic converter are raised quickly at the initial stage of the operation of an engine to activate the catalysts and thereby achieve increase in the exhaust gas conversion. The level of power is reduced after the desired temperature has been reached. In consequence, the catalytic converter can be operated efficiently an economically.

## Claims

1. A heater comprising a resistance-adjusted heatable sintered honeycomb structure (10) of Fe-Cr-Al, Fe-Cr or Fe-Al, having a large number of passages (11), the honeycomb structure (10) having at least two electrodes (15) for electrical connection so that a current can flow through the honeycomb structure (10),
   wherein
   the honeycomb structure (11) has at least one slit (12) to adjust its resistance to the flow of current such that a current density of at least 5 $A/mm^2$ is obtainable in the structure at a voltage of not more than 25V between the electrodes (15).

2. A heater according to claim 1 in which a catalyst is provided on the honeycomb structure (10) so that it constitutes a catalytic converter.

3. A catalytic converter comprising a main monolithic catalyst disposed adjacent a heater according to claim 1 or claim 2.

4. A catalytic converter according to claim 3 in which the heatable honeycomb structure (10) is disposed upstream of a single main monolithic catalyst.

5. A catalytic converter according to claim 3 in which the heatable honeycomb structure (10) is disposed between two main monolithic catalysts.

6. A catalytic converter according to claim 3 in which the heatable honeycomb structure (10) is disposed downstream of the main monolithic catalyst.

7. A heater according to claim 1 or claim 2, or a catalytic converter according to any one of claims 3 to 6, in which the honeycomb structure (10) is made by forming powder material into a honeycomb configuration by extrusion and then sintering.

8. A heater or catalytic converter according to any one of the preceding claims in which the honeycomb structure is of metal and the resistance of the honeycomb structure (10) is between 0.001Ω and 0.5Ω.

9. A heater or catalytic converter according to any one of the preceding claims in which the cell density of the honeycomb structure (10) is from 15.5 to 62 cells/$cm^2$ (100 to 400 cells/$in^2$) and the cell wall thickness is from 75 to 500μm.

10. A heater or catalytic converter according to any one of claims 1 to 9 in which the at least one slit (12) is parallel to the walls (13) of the passages (11).

11. A method of operating a catalytic converter according to claim 3, comprising causing said current to flow at a current density of at least 5$A/mm^2$.

**12.** A method according to claim 11 in which the current density is not more than 30A/mm$^2$.

**13.** A method according to claim 11 or claim 12 in which the current density is at least 8A/mm$^2$.

**14.** A method according to any one of claims 11 to 13 comprising

using current density of at least 5A/mm$^2$ at the time of starting of the engine and maintaining it until the heatable honeycomb structure (10) reaches a catalyst activation temperature, and then
reducing the power supplied to the heatable honeycomb structure (10).

**15.** A method according to any one of claims 11 to 14 in which the voltage applied between the electrodes (15), to give the current density of at least 5A/mm$^2$, is not more than 25V.

**Patentansprüche**

**1.** Heizeinrichtung, umfassend eine erhitzbare gesinterte Wabenstruktur (10) aus Fe-Cr-Al, Fe-Cr oder Fe-Al mit eingestelltem Widerstand mit einer großen Anzahl an Durchgängen (11), wobei die Wabenstruktur (10) zumindest zwei Elektroden (15) zur elektrischen Verbindung aufweist, sodaß ein Strom durch die Wabenstruktur (10) fließen kann, worin
die Wabenstruktur (11) zumindest einen Schlitz (12) aufweist, um ihren Widerstand auf den Stromfluß einzustellen, sodaß in der Struktur bei einer Spannung von nicht mehr als 25 V zwischen den Elektroden (15) eine Stromdichte von zumindest 5 A/mm$^2$ erzielbar ist.

**2.** Heizeinrichtung nach Anspruch 1, bei der ein Katalysator an der Wabenstruktur (10) vorgesehen ist, sodaß sie eine Katalysatorvorrichtung darstellt.

**3.** Katalytischer Konverter, umfassend einen monolithischen Hauptkatalysator, der angrenzend an eine Heizeinrichtung nach Anspruch 1 oder Anspruch 2 angeordnet ist.

**4.** Katalytischer Konverter nach Anspruch 3, bei der die heizbare Wabenstruktur (10) stromaufwärts von einem einzelnen monolithischen Hauptkatalysator angeordnet ist.

**5.** Katalytischer Konverter nach Anspruch 3, bei der die heizbare Wabenstruktur (10) zwischen zwei monolithischen Hauptkatalysatoren angeordnet ist.

**6.** Katalytischer Konverter nach Anspruch 3, bei der die heizbare Wabenstruktur (10) stromabwärts vom monolithischen Hauptkatalysator angeordnet ist.

**7.** Heizeinrichtung nach Anspruch 1 oder 2 oder Katalysatorvorrichtung nach einem der Ansprüche 3 bis 6, bei der die Wabenstruktur (10) durch Formen von Pulvermaterial zu einer Wabenkonfiguration durch Extrudieren und anschließendes Sintern hergestellt ist.

**8.** Heizeinrichtung oder Katalysatorvorrichtung nach einem der vorangegangenen Ansprüche, bei der die Wabenstruktur aus Metall besteht und der Widerstand der Wabenstruktur (10) zwischen 0,001Ω und 0,5 Ω liegt.

**9.** Heizeinrichtung nach einem der vorangegangenen Ansprüche, bei der die Zelldichte der Wabenstruktur (10) von 15,5 bis 62 Zellen/cm$^2$ (100 bis 400 Zellen/in$^2$) und die Zellwanddicke von 75 bis 500 μm beträgt.

**10.** Heizeinrichtung oder Katalysatorvorrichtung nach einem der Ansprüche 1 bis 9, bei der der zumindest eine Schlitz (12) parallel zu den Wänden (13) der Durchgänge (11) verläuft.

**11.** Verfahren zum Betreiben eines katalytischen Konverters nach Anspruch 3, umfassend das Bewirken, daß der Strom mit einer Stromdichte von zumindest 5A/mm$^2$ fließt.

**12.** Verfahren nach Anspruch 11, worin die Stromdichte nicht mehr als 30A/mm$^2$ beträgt.

**13.** Verfahren nach Anspruch 11 oder 12, worin die Stromdichte zumindest 8A/mm$^2$ beträgt.

**14.** Verfahren nach einem der Ansprüche 11 bis 13, umfassend das Verwenden einer Stromdichte von zumindest 5A/mm$^2$ zum Zeitpunkt des Startens des Motors bzw. der Maschine und ihr Aufrechterhalten, bis die heizbare Wabenstruktur (10) eine Katalysatoraktivierungstemperatur erreicht, und das darauffolgende Reduzieren der der heizbaren Wabenstruktur (10) zugeführten Leistung.

**15.** Verfahren nach einem der Ansprüche 11 bis 14, worin die zwischen den Elektroden (15) angelegte Spannung zur Erzielung der Stromdichte von zumindest 5A/mm$^2$ nicht. mehr als 25 V beträgt.

**Revendications**

1. Dispositif de chauffage comprenant une structure en nid d'abeilles frittée chauffable à résistance réglable (10) en Fe-Cr-Al, Fe-Cr ou Fe-Al, ayant un grand nombre de passages (11), la structure en nid d'abeilles (10) ayant au moins deux électrodes (15) pour la connexion électrique, de manière qu'un courant puisse s'écouler à travers la structure en nid d'abeilles (10), où :
   la structure en nid d'abeilles (11) a au moins une fente (12) pour ajuster sa résistance à l'écoulement de courant, de manière qu'une densité de courant d'au moins 5 A/mm$^2$ puisse être obtenue dans la structure à une tension qui ne dépasse pas 25V entre les électrodes (15).

2. Dispositif de chauffage selon la revendication 1, où un catalyseur est prévu sur la structure en nid d'abeilles (10), de façon à constituer un convertisseur catalytique.

3. Convertisseur catalytique comprenant un catalyseur monolithique principal, disposé adjacent à un dispositif de chauffage selon la revendication 1 ou la revendication 2.

4. Convertisseur catalytique selon la revendication 3, où la structure chauffable en nid d'abeilles (10) est disposée en amont d'un seul catalyseur monolithique principal.

5. Convertisseur catalytique selon la revendication 3, où la structure en nid d'abeilles chauffable (10) est disposée entre deux catalyseurs monolithiques principaux.

6. Convertisseur catalytique selon la revendication 3, où la structure en nid d'abeilles chauffable (10) est disposée en aval du catalyseur monolithique principal.

7. Dispositif de chauffage selon la revendication 1 ou la revendication 2, ou un convertisseur catalytique selon l'une quelconque des revendications 3 à 6, où la structure en nid d'abeilles (10) est obtenue en formant une matière en poudre en une configuration en nid d'abeilles par extrusion, puis frittage.

8. Dispositif de chauffage ou convertisseur catalytique selon l'une quelconque des revendications précédentes, où la structure en nid d'abeilles est en métal et la résistance de la structure en nid d'abeilles (10) est comprise entre 0,001Ω et 0,5Ω.

9. Dispositif de chauffage ou convertisseur catalytique selon l'une quelconue des revendications précédentes, où la densité des alvéoles de la structure en nid d'abeilles (10) est comprise entre 15,5 et 62 alvéoles/cm$^2$ (100 à 400 alvéoles/ pouce$^2$) et l'épaisseur de paroi des alvéoles est comprise entre 75 et 500 µm.

10. Dispositif de chauffage ou convertisseur catalytique selon l'une quelconque des revendications 1 à 9, où la au moins une fente (12) est parallèle aux parois (13) des passages (11).

11. Méthode de fonctionnement d'un convertisseur catalytique selon la revendication 3, consistant à forcer ledit courant à s'écouler à une densité de courant d'au moins 5 A/mm$^2$.

12. Méthode selon la revendication 11, où la densité de courant ne dépasse pas 30 A/mm$^2$.

13. Méthode selon la revendication 11 ou la revendication 12, où la densité de courant est d'au moins 8 A/mm$^2$.

14. Méthode selon l'une quelconque des revendications 11 à 13, consistant à

utiliser une densité de courant d'au moins 5A/mm$^2$ au moment du démarrage du moteur et à la maintenir jusqu'à ce que la structure en nid d'abeilles chauffable (10) atteigne une température d'activation du catalyseur, puis

réduire la puissance fournie à la structure en nid d'abeilles chauffable (10).

15. Méthode selon l'une quelconque des revendications 11 à 14, où la tension appliquée entre les électrodes (15) pour donner la densité de courant d'au moins 5 A/mm$^2$ ne dépasse pas 25V.

# F I G. 1 (a)

# F I G. 1 (b)

# F I G.2